# FASCICULE DE BREVET EUROPEEN

(11) **EP 3 721 101 B1**
(45) Date de publication et mention de la délivrance du brevet: **25.10.2023**
(21) Numéro de dépôt: 18829424.3
(22) Date de dépôt: 27.11.2018
(51) Int. Cl.: F16B 5/02, F16B 37/04, B62D 35/02, B62D 25/20

(54) **DISPOSITIF DE MONTAGE D'UN ECROU A L'INTERIEUR D'UNE ALVEOLE D'UN CARENAGE DE FOND CONFIGURE POUR ETRE FIXE SOUS UN CHASSIS DE VEHICULE AUTOMOBILE**
VORRICHTUNG ZUR MONTAGE EINER MUTTER IN EINEM HOHLRAUM EINER UNTER EINEM KRAFTFAHRZEUGCHASSIS ZU BEFESTIGENDEN UNTERBODENVERKLEIDUNG
DEVICE FOR MOUNTING A NUT INSIDE A CAVITY OF AN UNDERBODY FAIRING CONFIGURED TO BE FIXED UNDER A MOTOR VEHICLE CHASSIS

(30) Priorité: 04.12.2017 FR 1761564
(43) Date de publication de la demande: 14.10.2020
(73) Titulaire: PSA Automobiles SA, 78300 Poissy (FR)
(72) Inventeur: BERTH, Stéphane, 92320 Chatillon (FR)
(86) Numéro de dépôt international: PCT/FR2018/052987
(87) Numéro de publication internationale: WO 2019/110890

(56) Documents cités:
- CN-A- 105 275 958
- DE-A1- 10 149 022
- DE-A1-102013 000 630
- US-A1- 2005 163 591

## Description

La présente invention relève du domaine des carénages de fond installés sous une plateforme d'un châssis de véhicule automobile. L'invention concerne plus spécifiquement les modalités de montage sous la plateforme d'un tel carénage, via des dispositifs de fixation comprenant notamment des écrous coopérants avec des goujons.

Un véhicule automobile comprend un châssis sur lequel sont montés divers équipements du véhicule. Plus spécifiquement, des éléments de fond sont installés sous la caisse du véhicule, en étant fixés sur une plateforme du châssis sur laquelle peuvent être montés divers équipements du véhicule.

Parmi de tels éléments de fond, des carénages de fond permettent de protéger un ou plusieurs équipements installés sous la plateforme. Les carénages de fond sont aussi couramment configurés en organes aérodynamiques qui permettent notamment d'améliorer la stabilité du véhicule en progression et/ou de réduire sa traînée. Les carénages de fond sont aussi potentiellement exploités pour canaliser l'air s'écoulant sous la caisse, afin de refroidir un ou plusieurs équipements du véhicule.

Un tel carénage de fond est globalement plan et est installé sous la plateforme, sur laquelle il est fixé au moyen de dispositifs de fixation répartis dans le plan général du carénage. Selon une forme courante de réalisation, les dispositifs de fixation sont du type par boulonnage, associant chacun un écrou coopérant avec un organe fileté, tel qu'une vis ou un goujon. Lorsque le carénage est plaqué à sa face supérieure contre la plateforme à sa face inférieure, les écrous et les organes filetés sont mis en coopération par un opérateur pour fixer le carénage à la plateforme et donc au châssis.

L'écrou ou la tête de l'organe fileté de l'un au moins des dispositifs de fixation est couramment logé à l'intérieur d'une alvéole formée dans le carénage de fond, tel qu'il ressort par exemple du document US20160339970 (MAZDA MOTOR Corp.). DE 10 2013 000630 A1 révèle un autre dispositif de fixation.

Cependant, le montage des carénages sous la plateforme est délicat à opérer. Pour faciliter une telle opération, il est connu de pré-équiper le carénage avec les écrous. Ainsi, des monteurs peuvent appliquer le carénage sous la plateforme et la maintenir ainsi en position lors de la mise en coopération entre les écrous et les organes filetés qui leurs sont affectés. Les écrous étant préalablement implantés sur le carénage, leur mise en coopération avec les organes filetés préalablement installés sur la plateforme en est facilitée.

Il est cependant fait le constat que les modalités d'implantation des écrous sur le carénage méritent d'être améliorées pour faciliter la tâche des monteurs.

Sur la base d'un tel constat, la présente invention a pour objet un dispositif de montage d'un écrou à l'intérieur d'une alvéole d'un carénage de fond configuré pour être fixé sous une plateforme d'un châssis de véhicule automobile. L'invention a aussi pour objet un carénage de fond comprenant au moins une alvéole de réception dudit écrou participante d'un dispositif de montage conforme à l'invention, ainsi qu'un véhicule automobile équipé d'au moins un carénage de fond conforme à l'invention.

Le but principal de l'invention est de faciliter la tâche d'un opérateur pour installer l'écrou à l'intérieur de l'alvéole.

Un autre but de l'invention est de rechercher un dit dispositif de montage dont l'aisance obtenue d'installation de l'écrou à l'intérieur de l'alvéole ne porte pas atteinte à la robustesse du maintien de l'écrou à l'intérieur de l'alvéole.

Un autre but de l'invention est de rechercher un dit dispositif de montage dont les avantages procurés n'induisent par un surcoût rédhibitoire du carénage, dans le contexte d'une concurrence économique notoirement sévère dans le domaine automobile.

Un autre but de l'invention est de rechercher un dit dispositif de montage en évitant de multiplier un référencement d'écrous diversement agencés pour être installés sur un même carénage, et/ou des aménagements diversifiés du dispositif de montage pour un même carénage.

Les buts visés par la présente invention sont atteints isolément ou en combinaison par application des dispositions qui suivent, considérées isolément ou en combinaison.

Le dispositif de l'invention est décrit dans la revendication 1 et concerne un dispositif de montage d'un écrou à l'intérieur d'une alvéole d'un carénage de fond configuré pour être fixé sous une plateforme d'un châssis de véhicule automobile.

Le dispositif de l'invention comprend ladite alvéole présentant un fond contre lequel est appliqué l'écrou, via au moins un organe élastiquement déformable qui est ménagé à l'intérieur de l'alvéole en surplomb du fond et qui prend appui contre une collerette que comprend l'écrou.

Dans ce contexte, le dispositif de l'invention est reconnaissable en ce que l'organe élastiquement déformable présente une rampe de guidage en translation de la collerette de l'écrou sous l'organe élastiquement déformable ou autrement dit entre l'organe élastiquement déformable et le fond de l'alvéole. La rampe est notamment ménagée à la face inférieure de l'organe élastiquement déformable qui est orientée vers le fond de l'alvéole, en délimitant entre le fond et la patte un couloir de guidage en translation de la collerette de l'écrou sous la patte vers la position d'installation de l'écrou dans l'alvéole.

Il est notamment considéré que l'alvéole est susceptible de présenter un volume restreint entre ses parois latérales s'étendant en élévation perpendiculairement à son fond. Un tel volume restreint est considéré comme induisant une difficulté pour l'opérateur à introduire la collerette de l'écrou sous l'organe élastiquement déformable ménagé en fond de l'alvéole.

Sur le fondement de ce constat, la formation de la rampe sur l'organe élastiquement déformable facilite la tâche de l'opérateur pour introduire l'écrou sous l'organe élastiquement déformable, par glissement de l'écrou sur le fond de l'alvéole vers l'organe élastiquement déformable qui surplombe le fond de l'alvéole.

L'opérateur peut approcher l'écrou vers l'organe élastiquement déformable suivant un sens d'introduction par translation de l'écrou sous l'organe élastiquement déformable. L'écrou est alors guidé par la rampe en position d'installation à l'intérieur de l'alvéole, en étant placé sous l'organe élastiquement déformable.

Selon l'invention, l'organe élastiquement déformable étant configuré en au moins une patte flexible. La rampe est ménagée à une extrémité amont de la patte orientée vers le sens d'introduction de l'écrou sous la patte.

Il est considéré une extension principale de la patte entre son extrémité d'ancrage au carénage et son extrémité libre opposée qui est prévue de fléchir élastiquement pour autoriser le passage de l'écrou sous la patte et par suite le maintenir en position. Dans ce contexte, la dite extrémité amont de la patte est identifiée au regard du sens d'introduction de l'écrou sous la patte.

Par exemple dans le cas où l'extension principale de la patte est parallèle au sens d'introduction de l'écrou sous la patte, l'extrémité amont de la patte est formée par son extrémité libre.

Par exemple encore dans le cas où l'extension principale de la patte est concourante au sens d'introduction de l'écrou sous la patte, tel que de préférence perpendiculairement, l'extrémité amont de la patte est formée par son extrémité latérale qui s'étend entre son extrémité d'ancrage au carénage et son extrémité libre, et qui est alors orienté vers le sens d'introduction de l'écrou sous la patte.

Selon une forme de réalisation et suivant le sens d'introduction de l'écrou sous la patte, la rampe s'étend vers un organe d'appui que comprend la patte pour sa prise d'appui élastique contre la collerette. Un tel organe d'appui est notamment ménagé à la face inférieure de la patte orientée vers le fond de l'alvéole.

De préférence et depuis le fond de l'alvéole, le bord amont de la rampe, qui est orienté vers le sens d'introduction de l'écrou sous la patte, est placé à une distance du fond qui est avantageusement supérieure à la dimension en élévation de la collerette.

Un jeu en élévation est ainsi ménagé entre la collerette de l'écrou et le passage ménagé entre le fond et l'extrémité amont de la patte. Un tel jeu permet à l'opérateur de pouvoir au besoin incliner légèrement l'écrou par rapport à la patte pour faciliter l'amorçage de l'introduction par translation de l'écrou sous la patte.

La rampe est notamment inclinée par rapport au fond de l'alvéole pour accroître le passage formé entre le fond de l'alvéole et l'extrémité amont de la patte, et ainsi diminuer progressivement l'extension en élévation du couloir de guidage de l'écrou sous la patte.

Selon une forme de réalisation, la rampe est susceptible de présenter une conformation plane.

De préférence, la rampe est de conformation convexe, à au moins un point d'inflexion, pour favoriser l'homogénéité de l'accroissement de l'effort de flexion de la patte lors de l'introduction de l'écrou sous la patte.

Selon une forme de réalisation, la rampe est notamment ménagée par un becquet formé sur la patte.

L'organe d'appui est avantageusement formé d'au moins un picot d'emboîtement à l'intérieur d'un logement ménagé sur la collerette, qui forme une butée de positionnement de l'écrou en position d'installation dans l'alvéole, et/ou un organe d'appui de la patte contre l'écrou pour son maintien en position.

De préférence, l'extrémité du picot logé dans le logement est conformée en calotte sphérique, pour certifier une prise d'appui ferme de la patte contre la collerette.

Selon une forme de réalisation, le dispositif comprend préférentiellement plusieurs pattes angulairement réparties en fond de l'alvéole. Dans ce cas, ledit logement est avantageusement formé d'une rainure annulaire de réception conjointe des picots que comprennent respectivement chacune des pattes.

L'invention a aussi pour objet un carénage de fond configuré pour être fixé sous une plateforme d'un châssis de véhicule automobile via une pluralité de dispositifs de fixation. Chacun des dispositifs de fixation comprend un écrou équipant le carénage et un organe fileté en prise sur la plateforme.

Dans ce contexte, le carénage de l'invention est reconnaissable en ce que l'écrou de l'un au moins des dispositifs de fixation étant logé à l'intérieur d'une dite alvéole du carénage, l'écrou est monté à l'intérieur de l'alvéole via un dispositif de montage conforme à l'invention.

L'invention a aussi pour objet un véhicule automobile équipé d'au moins un carénage de fond conforme à l'invention.

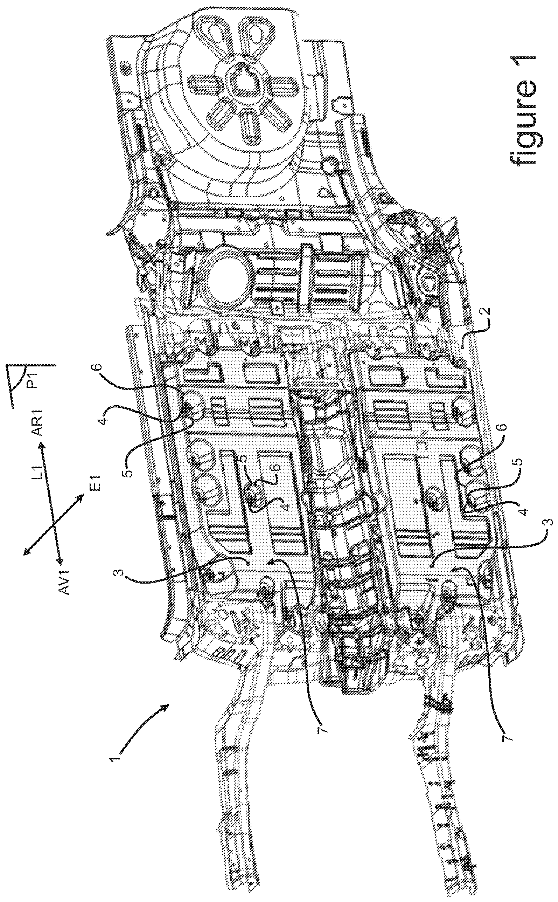

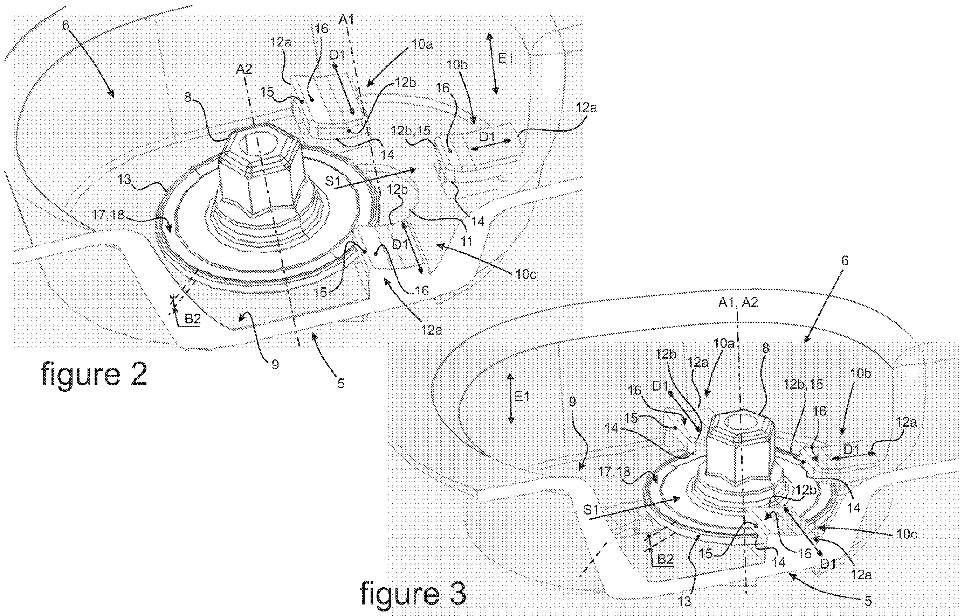

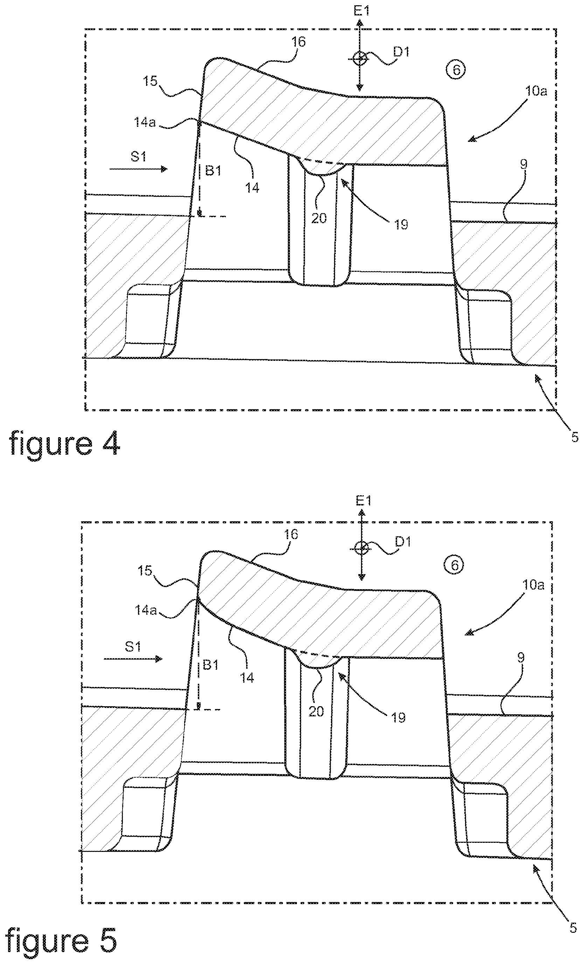

Des exemples de réalisation de la présente invention vont être décrits en relation avec les figures des planches annexées, dans lesquelles :
-) la figure 1 est une représentation en perspective de dessous d'un châssis de véhicule automobile sous lequel sont installés des carénages, illustrant le contexte de l'invention selon un exemple de réalisation.
-) la figure 2 et la figure 3 sont des représentations en perspective d'un dispositif de montage conforme à un exemple de réalisation de l'invention, illustrant successivement ses modalités de mise en oeuvre,
-) la figure 4 et la figure 5 sont des représentations en coupe de dispositifs de montage conformes à des exemples respectifs de réalisation de l'invention.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur la figure 1, le châssis 1 d'un véhicule automobile comprend une plateforme 2 montée sur une ossature du châssis 1. La plateforme 2 est susceptible d'être composée de plusieurs panneaux et permet notamment d'installer sur le châssis 1 divers équipements du véhicule.

Des carénages 3 de fond globalement plans P1 sont installés sous la plateforme 2. De tels carénages forment notamment des boucliers de protection d'équipements du véhicule, ainsi que des déflecteurs d'air permettant d'améliorer la stabilité du véhicule en progression et/ou de canaliser l'air s'écoulant sous le châssis 1 lorsque le véhicule est en progression.

Les carénages 3 s'étendent en élévation E1 suivant une direction perpendiculaire à leur plan global P1 et typiquement considérée depuis le plan de roulage du châssis 1.

Les carénages 3 sont fixés à la plateforme 2 suivant leur plan global P1 via une pluralité de dispositifs de fixation 4, (dont seulement quelques-uns sont référencés pour éviter d'alourdir la figure). Les dispositifs de fixation 4 sont répartis sur les carénages 3 en étant orientés en élévation E1 pour procurer un plaquage des carénages 3 contre la face inférieure de la plateforme 2.

Selon l'exemple illustré, deux carénages 3 de conformations similaires sont montés latéralement adjacents sous la plateforme 2 à distance l'un de l'autre. Les carénages 3 s'étendent chacun parallèlement suivant une direction longitudinale L1 d'extension du châssis 1 orientée entre l'avant AV1 et l'arrière AR1 du châssis 1. Les carénages 3 sont classiquement orientés suivant leur plan global P1 parallèlement au plan d'extension de la plateforme 2 et donc globalement parallèlement au plan de roulage du châssis 1.

Les carénages 3 présentent une paroi d'appui globale contre la face inférieure de la plateforme 2. La paroi d'appui globale est segmentée en plusieurs parois d'appui 5 réparties suivant le plan P1 des carénages 3. Les carénages 3 sont appliqués contre la face inférieure de la plateforme 2 à leur face supérieure via les parois d'appui 5 au moyen des dispositifs de fixation 4.

Les dispositifs de fixation 4 sont disposés pour au moins une partie d'entre eux à l'intérieur d'alvéoles 6 ménagées dans les carénages 3 en étant ouvertes sur la face inférieure 7 des carénages 3. De tels dispositifs de fixation 4 sont typiquement du type par boulonnage et comprennent chacun un écrou appliqué contre l'une des parois d'appui 5 et coopérant avec un organe fileté placé en prise sur la plateforme 2 et traversant le carénage 3.

Dans le contexte de l'invention comme illustré sur les figures 2 et 3, l'écrou 8 des dispositifs de fixation 4 est préalablement monté sur les carénages 3 via un dispositif de montage de l'invention, en étant logé à l'intérieur d'une alvéole 6 qui lui est affectée.

Plus particulièrement sur les figures 2 à 5, le fond 9 des alvéoles 6 participe à la formation desdites parois d'appui 5, à leur face extérieure prévue d'être orientée vers ladite plateforme 2. L'écrou 8 est logé à l'intérieur de l'alvéole 6 qui lui est affectée, en étant maintenu en position d'installation à l'intérieur de l'alvéole 6 au moyen d'un dispositif de montage relevant de l'invention.

Le dispositif de montage comprend ladite alvéole 6 de réception de l'écrou 8, qui est munie d'une pluralité de pattes 10a, 10b, 10c flexibles de maintien de l'écrou 8 en position d'installation à l'intérieur de l'alvéole 6. Selon l'exemple illustré sur les figures 2 et 3, les pattes 10a, 10b, 10c sont au nombre de trois et sont angulairement réparties à 90° autour de l'axe A1 d'une ouverture 11 de passage dudit organe fileté coopérant avec l'écrou 8.

Selon l'exemple illustré, les pattes 10a, 10b, 10c sont issues de la matière du carénage 3. Les pattes 10a, 10b, 10c sont notamment formées par moulage, conjointement à la formation du carénage 3 et donc des alvéoles 6. Selon une variante, les pattes 10a, 10b, 10c sont aussi susceptibles d'être formées par découpage et pliage du fond 9 de l'alvéole 6.

Les pattes 10a, 10b, 10c sont flexibles entre leur extrémité d'ancrage 12a au fond 9 de l'alvéole 6 qui est opposée à leur extrémité libre 12b suivant la direction d'extension principale D1 individuelle des pattes 10a, 10b, 10c. Les pattes 10a, 10b, 10c sont ainsi configurées en organe élastiquement déformable prenant un appui élastique contre l'écrou 8, pour le maintenir en position d'installation à l'intérieur de l'alvéole 6.

En position d'installation de l'écrou 8 à l'intérieur de l'alvéole 6, l'axe A2 de l'écrou 8 et l'axe A1 de l'ouverture 11 de passage dudit organe fileté sont coaxiaux comme illustré sur la figure 3.

Sur les figures 2 et 3, l'écrou 8 est muni d'une collerette 13 pour son introduction conjointement sous les pattes 10a, 10b, 10c. Par suite de l'introduction de la collerette 13 sous les pattes 10a, 10b, 10c, comme illustré sur la figure 3, l'écrou 8 est plaqué élastiquement par les pattes 10a, 10b, 10c contre le fond 9 de l'alvéole 6, en étant interposé entre eux.

Ainsi, l'écrou 8 est maintenu en position d'installation à l'intérieur de l'alvéole 6 via la prise d'appui élastique des pattes 10a, 10b, 10c contre la collerette 13.

Cependant, le volume intérieur de l'alvéole 6 peut rendre délicate l'introduction de l'écrou 8 sous les pattes 10a, 10b, 10c via la collerette 13. Pour faciliter une telle opération, les pattes 10a, 10b, 10c présentent chacune une rampe 14 de guidage de l'écrou 8, via la collerette 13, vers sa position d'installation à l'intérieur de l'alvéole 6, comme visible sur les figures 4 et 5.

La rampe 14 est ménagée à une extrémité amont 15 des pattes 10a, 10b, 10c qui est orientée en direction du sens S1 d'introduction de l'écrou 8 sous les pattes 10a, 10b, 10c. L'introduction de l'écrou 8 sous les pattes 10a, 10b, 10c est essentiellement réalisée par une translation de l'écrou 8 effectuée par un opérateur par glissement de l'écrou 8 sur le fond 9 de l'alvéole 6.

La rampe 14 est ménagée par un becquet 16 formé à l'extrémité amont 15 des pattes 10a, 10b, 10c. La distance B1 de séparation en élévation E1 entre le bord amont 14a de la rampe 14 et le fond 9 de l'alvéole 6 est supérieure à la dimension B2 en élévation de la collerette 13. L'engagement de la collerette 13 sous les pattes 10a, 10b, 10c par l'opérateur en est facilité.

La collerette 13 comporte une rainure 17 annulaire à sa face prévue d'être orientée vers les pattes 10a, 10b, 10c, comme visible sur les figures 2 et 3. La rainure 17 ménage un logement 18 de réception d'organes d'appui 19 que comportent respectivement les pattes 10a, 10b, 10c entre leur extrémité libre 12b et leur extrémité d'ancrage 12a, tel que visible sur les figures 4 et 5. Les organes d'appui 19 sont chacun formés de picots 20 en forme de calotte sphérique.

Suivant le sens S1 d'introduction de l'écrou 8 sous les pattes 10a, 10b, 10c, la rampe 14 s'étend jusqu'au dit organe d'appui 19 pour sa prise d'appui élastique contre la collerette 13 par suite du fléchissement des pattes 10a, 10b, 10c. Lorsque l'écrou 8 est en position d'installation à l'intérieur de l'alvéole 6, l'extrémité libre 12b des pattes 10a, 10b, 10c exerce une pression sur la collerette 13 pour maintenir l'écrou 8 à l'intérieur de l'alvéole 6.

Selon la forme de réalisation illustrée sur la figure 4, la rampe 14 présente une configuration plane. Selon une variante, la rampe 14 est de préférence de configuration convexe comme illustrée sur la figure 5, pour accroître encore l'aisance d'introduction de la collerette 13 sous les pattes 10a, 10b, 10c par l'opérateur.

## Revendications

1. Dispositif de montage d'un écrou (8) à l'intérieur d'une alvéole (6) d'un carénage (3) de fond configuré pour être fixé sous une plateforme (2) d'un châssis (1) de véhicule automobile, le dispositif comprenant ladite alvéole (6), **caractérisé en ce que** l'alvéole présente un fond (9) contre lequel l'écrou peut être appliqué via au moins un organe élastiquement déformable (10a, 10b, 10c) ménagé à l'intérieur de l'alvéole (6) en surplomb du fond (9) et qui est apte à s'appuyer contre une collerette (13) que comprend l'écrou (8), et **en ce que** l'organe élastiquement déformable (10a, 10b, 10c) présente une rampe (14) de guidage en translation de la collerette (13) de l'écrou (8) sous l'organe élastiquement déformable (10a, 10b, 10c), et **en ce que** l'organe élastiquement déformable est configuré en au moins une patte flexible (10a, 10b, 10c), la rampe (14) étant ménagée à une extrémité amont (15) de la patte (10a, 10b, 10c) orientée vers le sens (S1) d'introduction de l'écrou (8) sous la patte (10a, 10b, 10c).

2. Dispositif selon la revendication 1, **caractérisé en ce que** suivant le sens (S1) d'introduction de l'écrou (8) sous la patte (10a, 10b, 10c), la rampe (14) s'étend vers un organe d'appui (19) que comprend la patte (10a, 10b, 10c) pour sa prise d'appui élastique contre la collerette (13).

3. Dispositif selon l'une quelconque des revendications 1 ou 2, **caractérisé en ce que** depuis le fond (9) de l'alvéole (6), le bord (14a) amont de la rampe (14), qui est orienté vers le sens (S1) d'introduction de l'écrou (8) sous la patte (10a, 10b, 10c), est placé à une distance (B1) du fond (9) qui est supérieure à la dimension (B2) en élévation (E1) de la collerette (13).

4. Dispositif selon l'une quelconque des revendications 1 à 3, **caractérisé en ce que** la rampe (14) est de conformation convexe.

5. Dispositif selon l'une quelconque des revendications 1 à 4, **caractérisé en ce que** la rampe (14) est ménagée par un becquet (16) formé sur la patte (10a, 10b, 10c).

6. Dispositif selon l'une quelconque des revendications 2 à 5, **caractérisé en ce que** l'organe d'appui (19) est formé d'au moins un picot (20) d'emboîtement à l'intérieur d'un logement (18) ménagé sur la collerette (13).

7. Dispositif selon la revendication 6, **caractérisé en ce que** le dispositif comprenant plusieurs pattes (10a, 10b, 10c) angulairement réparties en fond de l'alvéole (6), ledit logement (18) est formé d'une rainure (17) annulaire de réception conjointe des picots (20) que comprennent respectivement chacune des pattes (10a, 10b, 10c).

8. Carénage (3) de fond configuré pour être fixé sous une plateforme (2) d'un châssis (1) de véhicule automobile, via une pluralité de dispositifs de fixation (4) comprenant chacun un écrou (8) équipant le carénage (3) et un organe fileté en prise sur la plateforme (2), **caractérisé en ce que** l'écrou (8) de l'un au moins des dispositifs de fixation (4) étant logé à l'intérieur d'une dite alvéole (6) du carénage (3), l'écrou (8) est monté à l'intérieur de l'alvéole (6) via un dispositif de montage selon l'une quelconque des revendications 1 à 7.

9. Véhicule automobile équipé d'au moins un carénage (3) de fond selon la revendication 8.

## Patentansprüche

1. Vorrichtung zur Montage einer Mutter (8) innerhalb einer Vertiefung (6) einer Verkleidung (3), die zur Befestigung unter einer Plattform (2) eines Kraftfahrzeugrahmens (1) ausgebildet ist, wobei die Vorrichtung die Vertiefung (6) mit einem Boden (9) aufweist, gegen den die Mutter (8) über mindestens ein elastisch verformbares Element (10a, 10b, 10c) im Inneren der Vertiefung (6), das über dem Boden (9) liegt, anlegbar ist und das zur Anlage an einem Kragen geeignet ist Klammer (13), die die Mutter (8) umfasst, und **dadurch gekennzeichnet, dass** das elastisch verformbare Element (10a, 10b, 10c) in wenigstens einer flexiblen Lasche (10a, 10b, 10c) ausgebildet ist, wobei die Rampe (14) an einem stromaufwärtigen Ende (15) der Lasche (10a, 10b, 10c) ausgebildet ist, das in Richtung (S1) zum Einführen der Mutter (8) unter der Lasche (10a, 10b, 10c) gerichtet ist c).

2. Vorrichtung nach Anspruch 1, **dadurch gekennzeichnet, dass** sich die Rampe (14) in der Einführrichtung (S1) der Mutter (8) unter der Lasche 10a, 10b, 10c) zu dem Stützorgan (19) hin erstreckt, das die Lasche 10a, 10b, 10c) für ihren elastischen Eingriff in den Flansch (13) umfasst.

3. Vorrichtung nach einem der Ansprüche 1 oder 2, **dadurch gekennzeichnet, dass** vom Boden (9) der Vertiefung (6) aus der stromaufwärtige Rand (14a) der Rampe (14), der der Einführrichtung (S1) der Mutter (8) unter der Lasche (10a, 10b, 10c) zugewandt ist, in einem Abstand (B1) vom Boden (9) angeordnet ist, der größer ist als die erhabene Abmessung (B2) des Flansches (13).

4. Vorrichtung nach einem der Ansprüche 1 bis 3, **dadurch gekennzeichnet, dass** die Rampe (14) konvex ausgebildet ist.

5. Vorrichtung nach einem der Ansprüche 1 bis 4, **dadurch gekennzeichnet, dass** die Rampe (14) durch einen an der Lasche (10a, 10b, 10c) ausgebildeten Spoiler (16) gebildet ist.

6. Vorrichtung nach einem der Ansprüche 2 bis 5, **dadurch gekennzeichnet, dass** das Abstützorgan (19) durch wenigstens einen Steckstift (20) im Inneren einer am Kragen (13) ausgebildeten Aufnahme (18) gebildet ist.

7. Vorrichtung nach Anspruch 6, **dadurch gekennzeichnet, dass** die Vorrichtung eine Vielzahl von Ansätzen (10a, 10b, 10c) aufweist, die winklig unter dem Boden der Vertiefung (6) verteilt sind, wobei die Aufnahme (18) aus einer ringförmigen Nut (17) zur gemeinsamen Aufnahme der Ansätze (20) gebildet ist, die jeder der Ansätze (10a, 10b, 10c) aufweist.

8. Bodenverkleidung (3), die so konfiguriert ist, dass sie unter einer Plattform (2) eines Rahmens (1) eines Kraftfahrzeugs über eine Vielzahl von Befestigungsvorrichtungen (4) befestigt werden kann, wobei jede eine Mutter (8) aufweist, die an der Verkleidung (3) angebracht ist, und ein mit Gewinde versehenes Element, das mit der Plattform (2) in Eingriff steht, **dadurch gekennzeichnet, dass** die Mutter (8) von mindestens einer der Befestigungsvorrichtungen (4) innerhalb einer genannten Vertiefung (6) der Verkleidung (3) untergebracht ist, wobei die Mutter (8) innerhalb der Vertiefung (6) über eine Befestigungsvorrichtung gemäß Verfahren nach einem der Ansprüche 1 bis 7.

9. Kraftfahrzeug mit mindestens einer Bodenverkleidung (3) nach Anspruch 8.

## Claims

1. Device for mounting a nut (8) inside a recess (6) of a bottom fairing (3) configured to be fixed under a platform (2) of a motor vehicle chassis (1), the device comprising said recess (6) having a bottom (9) against which the nut (8) can be applied via at least one elastically deformable member (10a, 10b, 10c) arranged inside the recess (6) overhanging the bottom (9) and which is able to bear against a flange (9) 13) that the nut (8) comprises, and in that the elastically deformable member (10 a, 10 b, 10 c) is configured in at least one flexible tab (10 a, 10 b, 10 c), the ramp (14) being formed at an upstream end (15) of the tab (10 a, 10 b, 10 c) oriented towards the direction (S 1) of introduction of the nut (8) under the tab (10 a, 10 b, 10 c).

2. Device according to Claim 1, **characterized in that**, in the direction (S1) in which the nut (8) is inserted under the tab 10a, 10b, 10c), the ramp (14) extends towards the bearing member (19) which the tab 10a, 10b, 10c comprises for its elastic bearing engagement against the collar (13).

3. Device according to either of Claims 1 and 2, **characterized in that**, from the bottom (9) of the cell (6), the upstream edge (14a) of the ramp (14), which is oriented towards the direction (S1) of introduction of the nut (8) under the lug (10a, 10b, 10c), is placed at a distance (B1) from the bottom (9) which is greater than the dimension (B2) in elevation (E1) of the flange (13).

4. Device according to any one of Claims 1 to 3, **characterized in that** the ramp (14) is convex in shape.

5. Device according to any one of Claims 1 to 4, **characterized in that** the ramp (14) is formed by a spoiler (16) formed on the lug (10a, 10b, 10c).

6. Device according to any one of Claims 2 to 5, **characterized in that** the bearing member (19) is formed by at least one stud (20) for fitting inside a housing (18) formed on the collar (13).

7. Device according to Claim 6, **characterized in that** the device comprising several tabs (10a, 10b, 10c) angularly distributed at the bottom of the cell (6), the said housing (18) is formed by an annular groove (17) for receiving together the pins (20) which each of the tabs (10a, 10b, 10c) respectively comprise.

8. Bottom fairing (3) configured to be fastened under a platform (2) of a motor vehicle chassis (1), via a plurality of fastening devices (4) each comprising a nut (8) fitted to the fairing (3) and a threaded member engaged on the platform (2), **characterized in that** the nut (8) of at least one of the fastening devices (4) being housed inside a said recess (6) of the fairing (3), the nut (8) is mounted inside the recess (6) via a mounting device according to any one of claims 1 to 7.

9. Motor vehicle equipped with at least one bottom fairing (3) according to claim 8.
